Europäisches Patentamt

(19) **European Patent Office**

Office européen des brevets

(11) Veröffentlichungsnummer: **0 012 406**
**B1**

(12) EUROPÄISCHE PATENTSCHRIFT

(45) Veröffentlichungstag der Patentschrift:
**23.06.82**

(21) Anmeldenummer: **79105025.5**

(22) Anmeldetag: **10.12.79**

(51) Int. Cl.³: **D 07 B 1/18,** F 16 G 11/00

(54) **Rundseil aus einer geraden Zahl von Litzen mit Schlaufe.**

(30) Priorität: **14.12.78 DE 2854019**

(43) Veröffentlichungstag der Anmeldung:
**25.06.80 Patentblatt 80/13**

(45) Bekanntmachung des Hinweises auf die Patenterteilung:
**23.06.82 Patentblatt 82/25**

(84) Benannte Vertragsstaaten:
**AT BE CH DE FR GB IT LU NL**

(56) Entgegenhaltungen:
**DE-B-1 075 018**
**DE-C-874 259**
**DE-U-7 501 592**
**FR-A-2 407 886**
**US-A-2 304 306**
**US-A-2 967 391**
**US-A-4 043 581**

(73) Patentinhaber: **Baur, Hans, Von-der-Osten-Strasse 6,**
**D-8900 Augsburg (DE)**

(72) Erfinder: **Baur, Hans, Von-der-Osten-Strasse 6,**
**D-8900 Augsburg (DE)**

(74) Vertreter: **Lemke, Jörg-Michael, Dipl.-Ing.,**
**Wolframstrasse 9, D-8900 Augsburg (DE)**

BUNDESDRUCKEREI BERLIN

Rundseil aus einer geraden Zahl von Litzen mit Schlaufe

Die Erfindung betrifft ein Rundseil aus einer geraden Zahl von Litzen mit Schlaufe, dessen Ende im Bereich der Schlaufe mit je der Hälfte der Litzen zu zwei gleichen Schenkelsträngen auseinandergewunden ist, die in entgegengesetzter Richtung zu der Schlaufe wieder zusammengewunden sind, und wobei ferner im Bereich der Litzenenden zwei metallische Klemmhülsen angebracht sind.

Bei einer in Fachkreisen unter der Bezeichnung »Flämisches Auge« bekannten Ausführung dieser Art (DE-C-874 259) sind die beiden freien, über die Länge der Schlaufe hinausreichenden Enden der Schenkelstränge um das ungeteilte Rundseil in der Länge etlicher Umschlingungen gewunden und bilden damit einen verdickten Schlaufenhals, der an seinem Anfang und an seinem Ende von je einer metallischen Klemmhülse abgeklemmt ist. Nachteilig ist hierbei, daß der verdickte Schlaufenhals die Länge des biegsamen Bereichs des Rundseils und auch den Schlaufenbereich als solchen von jeglicher Flexibilität ausschließt.

Beim Tragen von Lasten, die von dem durch die Schlaufe hindurchgezogenen, nur an seinem anderen Ende in einen Kranhaken eingehängten Rundseil umschlossen werden, wobei die Schlaufe wenigstens teilweise an der Last anliegen kann, stören die am Schlaufenhals sitzenden Klemmhülsen und besteht infolge der hierbei auftretenden Biegebelastungen die Gefahr des Aufbrechens der Seilklemmen mit der Folge eines Seilbruchs unterhalb der Seilbruchlast.

Aus der US-A-2 304 306 ist ein kompliziertes Seilgeflecht aus zwei nebeneinanderliegenden Seilen bekannt, die in gegensinniger Drehrichtung verseilt und in Längsabständen miteinander verschlungen sind. An einer gegenseitigen Verflechtungsstelle sind die Seile jeweils mit einer Litze des anderen Seils zu Strängen auseinandergeführt. In der Schlaufe sind die beiden Stränge nur über einen Teil ihrer Länge um eine zusätzliche Seele in einer Drehrichtung miteinander verseilt, die parallel zu der Drehrichtung des einen, aber gegenläufig zur Drehrichtung des anderen Stranges verläuft. An ihren beiden jeweiligen Enden sind die Stränge durch je eine metallische Klemmhülse abgeklemmt. Damit läßt sich eine Flexibilität bis in den Schlaufenbereich hinein erreichen, doch ist der Träger dieser Schlaufe kein Seil, sondern ein bandförmiges Gebilde besonderer Art, das nicht maschinell herstellbar ist, sondern mühsam von Hand hergestellt und verflochten werden muß. In seiner Bandform erfüllt dieses Gebilde auch nicht alle Eigenschaften eines Seiles besonders nicht hinsichtlich Verdrehbarkeit um seine Längsachse, ohne daß seine Festigkeit und Handlichkeit beeinträchtigt wird. Die Schlaufenbildung erfordert eine Neuverwindung, die nicht immer leicht ist, insbesondere wenn man an Drahtseile aus Stahl denkt. Dieses Geflecht hat daher keinen Eingang in die Praxis gefunden, wo man zum Tragen von Lasten auch heute noch an Rundseilen festhält.

Als Aufgabe liegt daher der Erfindung die Schaffung eines Rundseils mit Schlaufe der eingangs beschriebenen Art zugrunde, die unter Wahrung aller bekannten Eigenschaften eines Rundseils, wie Flexibilität in allen Freiheitsgraden, verbunden mit hoher Zugfestigkeit, bei maschineller Herstellbarkeit, eine Schlaufenbildung erlaubt, die von dem ungeteilten Rundseil ohne jede Verdickung oder Halsbildung, die z. B. durch Verspleißung oder metallische Klemmhülsen hervorgerufen wäre, in den Schlaufenbereich übergeht und leicht herstellbar ist.

Gemäß der Erfindung wird diese Aufgabe dadurch gelöst, daß die beiden Schenkelstränge über nur einen Teil ihrer Länge wieder zusammengewunden sind und daß an ihren beiden jeweiligen Enden je eine der beiden Klemmhülsen angebracht ist.

Bei der Erfindung ergibt sich eine Teilung des Rundseiles in absoluter Blöße, die bis dahin für unzulässig gehalten worden war. An dieser Stelle der Seil-Teilung erscheint nämlich das Seilgefüge gestört, indem die fehlenden Litzen die restlichen Litzen nicht mehr abstützen können. An dem Seilauflösepunkt bilden die abgehenden Schenkelstränge einen Winkel, der die Tragfähigkeit zu mindern scheint. Bei einsträngigem Seilgehänge und nicht geführten Lasten wurde das Auftreten von Momenten befürchtet, die das ganze Rundseil aufzudrehen drohen. Die vom Seilauflösepunkt gebildete Abspaltstelle hatte man für bedürftig befunden, »gefaßt« sein zu müssen. Bei der Erfindung hingegen stört also keine Seilklemme oder Verspleißungsverdickung oder Verspleißungsabbindung, da alle solche Dinge entfallen. Im Bereich ihrer wiederzusammengewundenen Schenkelstränge weist die Schlaufe unveränderte volle Seilstärke auf; im übrigen Bereich ist sie leicht biegsam. Die Zugfestigkeit von mit der erfindungsgemäß ausgebildeten Schlaufe ausgerüsteten Rundseilen ist unvermindert. Das Wiederzusammenwinden der Schenkelstränge macht keine Schwierigkeiten, weil die Litzenschläge selbst von aus Stahldraht verseilten Rundseilen spannungslos sind.

Die bei der Erfindung verwendeten Klemmhülsen brauchen nur einen einzigen vollen Seilquerschnitt abzuklemmen. Sie können daher wesentlich kleiner gehalten sein als die bekannten Seilklemmen, die zwei nebeneinander liegende Seile miteinander verklemmen sollen. Man kommt deshalb nicht nur mit kleineren Klemmhülsen aus, sondern auch mit geringeren Preßdrücken. Vorhandene Presen auch geringerer Leistung werden damit auch für die Bildung von Schlaufen an Seilen einsatzfähig, für deren Durchmesser sie bisher nicht ausreichten.

Relativ kleine Seilklemmen gewährleisten absolute Sicherheit gegen die volle Seilbruchlast. Sie lassen jede Spleißung mit ihrem Mehrbedarf an Seillänge und mit ihrer umständlichen und teuren Handarbeit vermeiden, für die außerdem nur 70% der Bruchlast zugelassen ist.

Zweckmäßigerweise umfaßt der wieder zusammengewundene Teil der Schenkelstränge etwa die Hälfte ihrer Länge.

Ein Ausführungsbeispiel der Erfindung ist in der Zeichnung dargestellt. Es zeigt

Fig. 1 das eine Ende eines sechslitzigen Drahtseils,

Fig. 2 das Auseinanderwinden je der Hälfte der Litzen zu zwei gleichen Schenkelsträngen mit aufgesteckten Klemmhülsen-Rohlingen,

Fig. 3 das Wiederzusammenwinden über nur einen Teil ihrer Länge,

Fig. 4 die fertige Schlaufe.

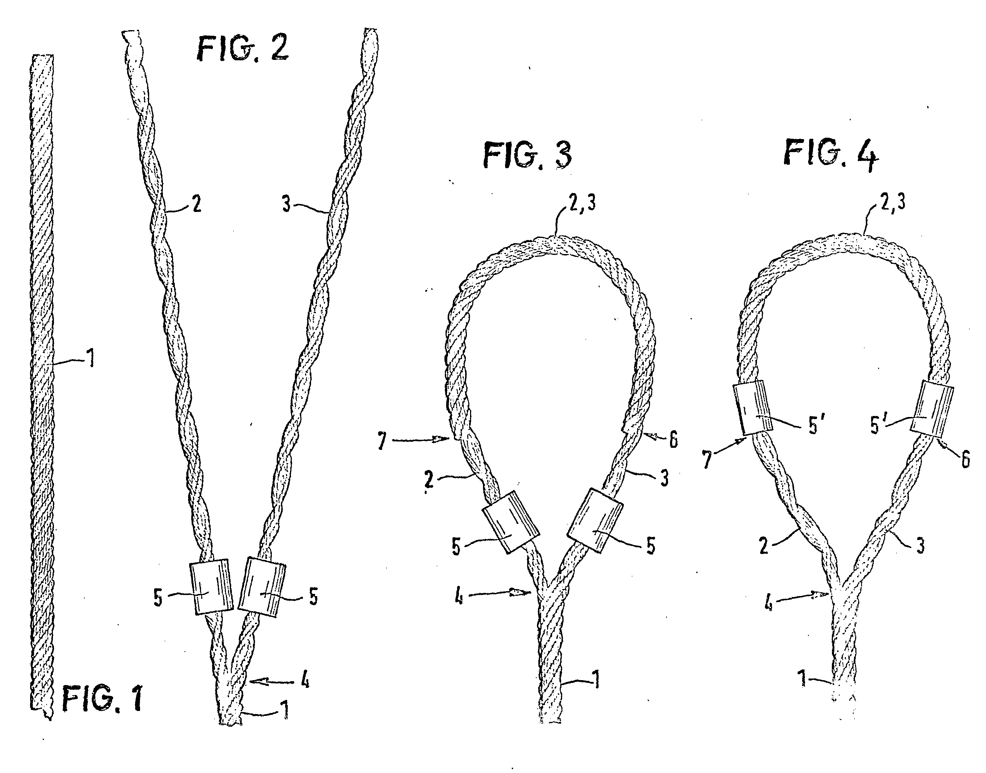

Die für den Bereich einer Schlaufe mit je drei seiner Litzen aus einem Seil 1 auseinandergewundenen beiden gleichen Schenkelsträngen 2 und 3 trennen sich an der Abspaltstelle 64 von dem Seil 1. In diesem in Fig. 2 dargestellten Zustand ist auf jeden Schenkelstrang je ein Klemmhülsen-Rohling 5 gesteckt. Er besteht in bekannter Weise aus einer Alu-Si-Legierung oder Eisen. Das Wiederzusammenwinden der Schenkelstränge 2 und 3 erfolgt gemäß Fig. 3 von Punkt 6 und 7; das ist etwa die halbe Länge. In dem in Fig. 4 dargestellten fertigen Zustand der Schlaufe sind die beiden jeweiligen Enden der Schenkelstränge zusammen mit diesen bei 6 und 7 zusammengeklemmt; die Seilklemmen haben die Form 5'.

Die nicht dargestellte, aus Hanf- oder Kunststoffschnur bestehende Seele des Drahtseils 1, um die die Litzen geschlungen sind und die sich in dem einen der beiden Schenkelstränge befindet, wird zweckmäßigerweise nach der Fertigstellung gemäß Fig. 4 von der betroffenen abgeklemmten Seilklemme 5' bis etwa ein oder zwei Zentimeter unterhalb des Punktes 4 abgeschnitten, damit sie sich nicht während der Benutzung des Seils allmählich von selbst herauslöst und unnütz und unschön herumhängt.

Was hier an einem sechslitzigen Drahtseil gezeigt ist, kann ebensogut an einem achtlitzigen Drahtseil erfolgen. Statt aus Stahldraht kann das Seil auch aus anderen Stoffen bestehen.

## Patentansprüche

1. Rundseile aus einer geraden Zahl von Litzen mit Schlaufe, dessen Ende im Bereich der Schlaufe mit je der Hälfte der Litzen zu zwei gleichen Schenkelsträngen auseinandergewunden ist, die in entgegengesetzter Richtung zu der Schlaufe wieder zusammengewunden sind, und wobei ferner im Bereich der Litzenenden zwei metallische Klemmhülsen angebracht sind, dadurch gekennzeichnet, daß die beiden Schenkelstränge (2, 3) über nur einen Teil ihrer Länge wieder zusammengewunden sind und daß an ihren beiden jeweiligen Enden je eine der beiden Klemmhülsen (5') angebracht ist.

2. Rundseil nach Anspruch 1, dadurch gekennzeichnet, daß der wieder zusammengewundene Teil der Schenkelstränge (2, 3) etwa die Hälfte ihrer Länge umfäßt.

## Claims

1. A round rope which comprises an even number of strands and has a loop and the end of which within the range of said loop is twisted apart so as to obtain two equal branches or links of skeins of strands, wherein each branch or limb of skeins of strands contains one half of said strands and wherein said two equal branches or limbs of skeins of strands are retwisted together with each other in opposite direction to form said loop and furthermore wherein two metallic clamping shells are provided within the range of the ends of said strands, characterized in that said two branches or limbs of skeins of strands (2, 3) are retwisted together with each other only along a portion of their lenght, and in that at the respective ends of said two branches or limbs of skeins of strands a respective one of said two clamping shells (5') is atteched.

2. The round rope according to claim 1, characterized in that the portion of the two branches or limbs of skeins of strands (2, 3) that are retwisted together comprises about one-half of the length of said branches or limbs of skeins of strands.

## Revendications

1. Câble cylindrique composé d'un nombre pair de torons avec boucle, dont l'extrémité est divisée au niveau de ladite boucle en deux branches semblables contenant chacune la moitié des torons, qui sont à nouveau réunies et retorsadées en sens opposé l'une de l'autre pour former la boucle; deux agrafes métalliques de serrage étant disposées à l'extrémité de chacun des torons, Caractérisé par le fait que les deux groupes de torons (2 et 3) ainsi séparés ne sont à nouveau réunis par le cablage torsadé que sur une partie de leur longueur et qu'à l'extrémité de chacun d'eux est disposée une agrafe métallique de serrage (5').

2. Câble cylindrique selon la revendication 1, Caractérisé par le fait que la partie retorsadée des groupes de torons précédemment séparés (2 et 3) comprend environ la moitié de leur longueur.

FIG. 2

FIG. 3

FIG. 4

2

3

2,3

2,3

1

7

6

7

6

5

5

5'

5'

2

3

2

3

4

4

4

1

1

5

5

4

1

FIG. 1

0 012 406